# EUROPÄISCHE PATENTSCHRIFT

(11) **EP 3 345 081 B1**
(45) Veröffentlichungstag und Bekanntmachung des Hinweises auf die Patenterteilung: **05.05.2021**
(21) Anmeldenummer: 16756653.8
(22) Anmeldetag: 15.08.2016
(51) Int. Cl.: G06F 3/0484, F24C 15/08, D06F 39/00

(54) **VERFAHREN ZUM BETRIEB EINES HAUSHALTSGERÄTS MIT EINER BERÜHRUNGSEMPFINDLICHEN BEDIENANZEIGE SOWIE BERÜHRUNGSEMPFINDLICHE BEDIENANZEIGE**
METHOD FOR OPERATING A HOUSEHOLD APPLIANCE WITH A TOUCH-SENSITIVE OPERATING DISPLAY AND TOUCH-SENSITIVE OPERATING DISPLAY
PROCÉDÉ DE FONCTIONNEMENT D'UN APPAREIL MÉNAGER AVEC UN ÉCRAN DE COMMANDE TACTILE ET ÉCRAN DE COMMANDE TACTILE

(30) Priorität: 31.08.2015 DE 102015216627
(43) Veröffentlichungstag der Anmeldung: 11.07.2018
(73) Patentinhaber: BSH Hausgeräte GmbH, 81739 München (DE)
(72) Erfinder: ORTMANN, Christoph, 81675 München (DE); PULS, Fabian, 80339 München (DE); MARSCH, Alexander, 83620 Feldkirchen-Westerham (DE); KRUG, Raphael, 80636 München (DE); SACHON, Robert, 80469 München (DE)
(86) Internationale Anmeldenummer: PCT/EP2016/069346
(87) Internationale Veröffentlichungsnummer: WO 2017/036776

(56) Entgegenhaltungen:
- EP-A1- 2 630 904
- EP-A1- 2 755 123
- EP-A2- 2 530 677
- WO-A1-2013/091376
- WO-A2-2014/124105
- DE-A1-102013 218 871
- US-A1- 2010 090 964
- US-A1- 2011 145 745
- US-A1- 2012 274 662

## Beschreibung

Die vorliegende Erfindung betrifft ein Verfahren zum Betrieb eines Haushaltsgerätes wie einem Herd oder einer Waschmaschine mit einer berührungsempfindlichen Bedienanzeige durch das Verbessern einer Bedienbarkeit einer Skala einer berührungsempfindlichen Bedienanzeige.

Darüber hinaus beschäftigt sich die vorliegende Erfindung mit einer entsprechenden berührungsempfindlichen Bedienanzeige, einem Haushaltsgerät mit einer solchen berührungsempfindlichen Bedienanzeige sowie einem Computerprogrammprodukt, das Programminstruktionen umfasst, die durch eine berührungsempfindlichen Bedienanzeige ausgeführt werden können.

Aus dem Stand der Technik sind seit langem berührungsempfindliche Bedienanzeigen bekannt. Heutzutage ist fast jedes Smartphone und jeder Tablet-PC mit einer solchen berührungsempfindlichen Bedienanzeige, die auch als "Touch Display" bezeichnet wird, ausgestattet. Bei berührungsempfindlichen Bedienanzeigen für Haushaltsgeräte ergibt sich häufig das Problem, dass die berührungsempfindliche Bedienanzeige recht klein ist, so dass es aufgrund der vergleichsweise großen Dicke des Fingers zu einer Fehlbedienung kommen kann.

EP 2 530 677 A2 offenbart ein Touchscreen-Steuerverfahren zum Steuern einer Wiedergabe von Multimedia-Inhalten unter Verwendung einer zeitlinienbasierten Schnittstelle, wobei diese das Erkennen einer Auswahl an einer bestimmten Stelle auf der Zeitleiste und ein selektives Zoomen eines Bereichs um den Ort, an dem die Auswahl erkannt wird, umfasst.

US 2011/0145745 A1 offenbart ein Verfahren zum Bereitstellen einer graphischen Benutzerschnittstelle (GUI) und eine diese verwendende Multimediavorrichtung. Dabei wird geprüft ob ein Benutzerbefehl eingegeben wird, um einen spezifischen Abschnitt eines GUI-Elements auszuwählen, der eine Vielzahl von Abschnitten enthält. Die Länge des ausgewählten Abschnitts wird vergrößert und die Längen der nicht ausgewählten Abschnitte werden reduziert, um den spezifischen Abschnitt des GUI-Elements auszuwählen.

US 2010/0090964 A1 offenbart eine Architektur, die taktilbasierte E / A-Transaktionen in Verbindung mit einer Benutzerschnittstelle (UI) mit begrenztem Formfaktor verbessert und vereinfachen kann.

WO 2013/091376 A1 offenbart ein zwei-dimensionales Telefonbuchsortierverfahren. In einer ersten Dimension wählt der Benutzer ein erstes Abruffeld aus. In Abhängigkeit des ersten Abruffeldes werden Kontakte in einem Adressbuch angezeigt. Durch die Auswahl eines zweiten Abruffeldes in einer zweiten Dimension wird eine Übereinstimmungsergebnisliste für den Benutzer angezeigt.

WO 2014/124105 A2 offenbart eine Touchscreen-Benutzeroberfläche, welche zur Steuerung einer Anwendung dient. Die Vorrichtung enthält eine Steuerungsvorrichtung die so konfiguriert ist, dass sie als Reaktion auf mindestens eine Benutzerauswahl über eine Touchscreen-Benutzerschnittstelle in Verbindung mit der Steuerungsvorrichtung dem Betrieb mindestens einer der Vorrichtungen zugeordneten Betriebskomponente steuert. Die Touchscreen-Benutzerschnittstelle weist einen Anzeigebildschirm zum Anzeigen einer Reihe von Zyklus-Icons auf, wobei jedes Zyklus-Icon einem jeweiligen Zyklus zugeordnet ist, der über die Kontrollvorrichtung implementiert werden kann.

Vor diesem Hintergrund ist es eine Aufgabe der vorliegenden Erfindung, ein Verfahren zum Betrieb eines Haushaltsgerätes wie einem Herd oder einer Waschmaschine mit einer berührungsempfindlichen Bedienanzeige durch das Verbessern einer Bedienbarkeit einer Skala einer berührungsempfindlichen Bedienanzeige anzugeben. Darüber hinaus soll eine entsprechende berührungsempfindliche Bedienanzeige vorgeschlagen werden, die leichter bedienbar ist. Eine zusätzliche Aufgabe besteht darin, ein Computerprogrammprodukt anzugeben, das mit einer handelsüblichen berührungsempfindlichen Bedienanzeige derartig kombiniert werden kann, dass eine erfindungsgemäße berührungsempfindliche Bedienanzeige entsteht.

Gemäß der vorliegenden Erfindung werden diese Aufgaben durch die Gegenstände der unabhängigen Patentansprüche gelöst. Die abhängigen Patentansprüche geben Ausführungsformen der Erfindung an.

Dementsprechend umfasst die vorliegende Erfindung ein Verfahren zum Verbessern einer Bedienbarkeit einer Skala einer berührungsempfindlichen Bedienanzeige, die beispielsweise an einem Haushaltsgerät wie einem Herd oder auch einer Waschmaschine angeordnet sein kann. Die Skala weist mehrere Skalenwerte auf, wobei eine Differenz zwischen dem letzten Skalenwert und dem ersten Skalenwert eine Skalenlänge definiert.

Die Skalenwerte können sowohl Zahlen als auch mindestens ein Wort umfassen. Beispielsweise ist es denkbar, dass die Skalenwerte die Zahlen 0 bis 9 umfassen, so dass mithilfe der Skala eine Kochstufe gewählt werden kann. Aber auch das Einstellen einer Zeit ist denkbar. In diesem Fall kann die Skala beispielsweise die Werte 0 bis 60 Minuten umfassen. Nicht nur quantitativ eingeteilte Skalen sind denkbar. Vielmehr kann die Skala auch qualitative Werte umfassen, wie z.B. schwach, mittel, stark usw. Sofern die Skalenwerte Worte umfassen, bietet es sich an, die Skalenlänge schlicht durch die Anzahl der Skalenwerte zu definieren. Eine Verschmutzungsskala mit den Werten schwach, mittel, stark und extrem hätte somit die Skalenlänge 4. Neben Worten können die Skalenwerte auch Bilder, Piktogramme oder Begriffe umfassen.

Gemäß dem erfindungsgemäßen Verfahren wird zunächst zumindest ein Teil der Skala auf einer Anzeigefläche der berührungsempfindlichen Bedienanzeige dargestellt. Dabei weist die Skala auf der Anzeigefläche eine Anzeigelänge auf. Bei einer Berührung der Anzeigefläche erkennt das Verfahren einen Berührungspunkt, an dem ein Nutzer die Anzeigefläche berührt. Es wird dann derjenige Skalenwert der Skala als Einstellwert ausgewählt, der dem Berührungspunkt unter den Skalenwerten am nächsten liegt. Dabei wird ein Bereich der Skala, in dem der Einstellwert liegt, als aktiver Bereich und mindestens ein weiterer Bereich der Skala, der jenseits des aktiven Bereichs liegt, als passiver Bereich ausgewählt. Wenigstens ein Teil des aktiven Bereichs wird gegenüber dem passiven Bereich auf der Anzeigefläche vergrößert dargestellt, wobei zumindest der Einstellwert dargestellt wird.

Eine grundlegende Idee der vorliegenden Erfindung besteht also darin, dass ein Bereich der Skala, in dem eine Einstellung vorgenommen werden soll, vergrößert dargestellt wird. Man kann sich dieses Prinzip also als eine Art Lupenfunktion vorstellen. Dadurch dass der aktive Bereich vergrößert dargestellt wird, fällt die Größe des Fingers, mit dem der Nutzer die Skala einstellen will, nicht mehr unangenehm ins Gewicht. Eine nervige Fehlfunktion der berührungsempfindlichen Bedienanzeige wird dadurch unwahrscheinlicher.

Erfindungsgemäß ist vorgesehen, einen Faktor um den der aktive Bereich gegenüber dem passiven Bereich vergrößert ist, an eine Größe des Fingers anzupassen. Auf diese Weise ist es möglich, selbst für Nutzer mit besonders groben Fingern ein hervorragendes Einstellerlebnis zu gewährleisten. Darüber hinaus kann der Faktor vom Anpressdruck am Berührungspunkt abhängig sein. Dadurch kann der Nutzer, wenn er mit seinem Finger besonders stark auf die Anzeigefläche drückt, eine besonders starke Vergrößerung erreichen, so dass selbst sehbehinderten Personen eine komfortable Einstellung ermöglicht wird.

Die Skala kann in eine bestimmte Anzahl von Bereichen eingeteilt sein. Vor der ersten Berührung der Anzeigefläche durch den Nutzer sind die einzelnen Bereiche vorzugsweise alle gleich groß dargestellt. Erst durch die erste Berührung werden ein aktiver Bereich und ein passiver Bereich definiert und der aktive Bereich wird vergrößert dargestellt. Anschließend kann durch eine Berührung eines passiven Bereichs dieser zum aktiven Bereich und der bislang aktive Bereich zu einem passiven Bereich werden.

Man kann sich den damit erreichten Effekt so vorstellen, dass durch eine Berührung der Anzeigefläche der Nutzer zunächst ungefähr einen Bereich angibt, in dem er eine Einstellung vornehmen will. Dieser Bereich wird aktiviert und vergrößert dargestellt, so dass der Nutzer anschließend in einem zweiten Schritt eine Feineinstellung vornehmen kann.

In einer Ausführungsform wird zusätzlich derjenige Skalenwert als Nachbarwert ausgewählt, der dem Berührungspunkt unter den Skalenwerten am zweitnächsten liegt. Der Nachbarwert ist dabei wiederum Bestandteil des aktiven Bereichs. Wenn der Nachbarwert kleiner als der Einstellwert ist, wird er auf einer ersten Seite des Einstellwertes auf der Anzeigefläche dargestellt. Ist er hingegen größer als der Einstellwert, wird der Nachbarwert auf einer der ersten Seite gegenüberliegenden zweiten Seite des Einstellwertes auf der Anzeigefläche dargestellt. Dabei ist ein dargestellter Abstand zwischen dem Einstellwert und dem Nachbarwert auf der Anzeigefläche geteilt durch die Anzeigelänge größer als ein theoretischer Abstand zwischen dem Einstellwert und dem Nachbarwert geteilt durch die Skalenlänge.

Unter einem dargestellten Abstand zwischen dem Einstellwert und dem Nachbarwert auf der Anzeigefläche kann insbesondere ein Abstand zwischen dem Mittelpunkt des dargestellten Einstellwerts und dem Mittelpunkt des dargestellten Nachbarwerts verstanden werden. Je nach der Darstellungsgröße der beiden Werte können sich diese also auch durchaus überlappen, ohne dass ihr Abstand voneinander deswegen Null betragen würde. Unter einem theoretischen Abstand hingegen kann bei zwei aufeinander folgenden Skalenwerten insbesondere der Wert 1 verstanden werden.

Das Zusammenspiel des dargestellten Abstands mit dem theoretischen Abstand soll anhand eines Beispiels erläutert werden. Nehmen wir an, eine Skala würde die zehn Kochstufen 0 bis 9 umfassen und würde somit eine Skalenlänge von 10 aufweisen. Die Anzeigelänge betrage im vorliegenden Beispiel 10 cm. Der Finger berührt die dargestellte Skala etwa bei 5,3, so dass als Einstellwert die 5 und als Nachbarwert die 6 gewählt wird. Der dargestellte Abstand zwischen der dargestellten 5 und der dargestellten 6 beträgt jetzt aber nicht nur 1 cm, wie es zu erwarten wäre, wenn man allen Skalenwerten für ihre Darstellung denselben Raum zugestehen würde, sondern ist auf 3 cm vergrößert. In diesem Beispiel findet also eine Vergrößerung um den Faktor 3 statt.

In einer weiteren Ausführungsform besitzt der aktive Bereich zusätzlich einen nächst kleineren Skalenwert in Bezug auf den Einstellwert und einen nächst größeren Skalenwert in Bezug auf den Einstellwert. Das vergrößerte Darstellen des aktiven Bereichs umfasst dann ein Darstellen des nächst kleineren Skalenwertes auf einer ersten Seite des Einstellwertes auf der Anzeigefläche und ein Darstellen des nächst größeren Skalenwertes in Bezug auf den Einstellwert auf einer der ersten Seite gegenüberliegenden zweiten Seite des Einstellwertes auf der Anzeigefläche. Wiederum ist ein dargestellter Abstand zwischen dem nächst kleineren Skalenwert und dem nächst größeren Skalenwert auf der Anzeigefläche geteilt durch die Anzeigelänge größer als ein theoretischer Abstand zwischen dem nächst kleineren Skalenwert und dem nächst größeren Skalenwert geteilt durch die Skalenlänge. Die oben ausgeführten Erläuterungen zum dargestellten und theoretischen Abstand gelten hier natürlich analog.

Erfindungsgemäß wird der Nachbarwert in Abhängigkeit von seinem Abstand zu dem Berührungspunkt gegenüber dem Einstellwert kleiner, dunkler und/oder kontrastärmer dargestellt. Anders ausgedrückt wird der Nachbarwert gegenüber dem Einstellwert vager bzw. weniger deutlich dargestellt, so dass dem Nutzer intuitiv bewusst ist, dass sich sein Finger näher am Einstellwert als am Nachbarwert befindet. Das Wort dunkler ist hierbei unter der Annahme zu lesen, dass die Werte erhellt gegenüber einer ansonsten dunklen Anzeigefläche dargestellt sind, wie es bei z.B. Smartphones und Tablet-PCs allgemein üblich ist. Ist die Anzeigefläche hingegen ohne Energiezufuhr hell und werden die Werte gegenüber der restlichen Anzeigefläche dunkler dargestellt (wie es bspw. bei einigen E-Book-Readern in Verbindung mit elektronischer Tinte verwirklich ist), so ist mit dem hier verwendeten Wort "dunkler" "heller" gemeint. Entscheidend für den hier erläuterten Gedanken ist lediglich, dass der Nachbarwert gegenüber dem Einstellwert vager bzw. weniger deutlich dargestellt wird.

In der Ausführungsform mit dem dargestellten nächst kleineren und nächst größeren Skalenwert werden der nächst kleinere Skalenwert und der nächst größere Skalenwert in Abhängigkeit von ihren Abständen zu dem Berührungspunkt gegenüber dem Einstellwert kleiner, dunkler und/oder kontrastärmer dargestellt. Bezüglich des Wortes "dunkler" gilt wiederum die oben erläuterte Annahme. In einer besonders bevorzugten Ausführungsform sind dabei der nächst kleinere und der nächst größere Skalenwert nicht zwingend gleich dargestellt. Vielmehr kann der Nutzer anhand eines Vergleichs der Darstellung des nächst kleineren Skalenwerts mit der Darstellung des nächst größeren Skalenwert erkennen, welcher der beiden Skalenwerte dem Berührungspunkt näher liegt. Vorzugsweise wird bei einer Verschiebung des Berührungspunktes die Größe, Helligkeit und/oder der Kontrast der dargestellten Werte entsprechend angepasst. Bei einer Verschiebung des Berührungspunktes in Richtung des Nachbarwerts wird der Nachbarwert also zunehmend größer, heller und/oder kontrastreicher und der Einstellwert zunehmend kleiner, dunkler und/oder kontrastärmer dargestellt. Analog wird bei der Ausführungsform mit dem nächst kleineren und nächst größeren Skalenwert bei einer Verschiebung des Berührungspunktes zur ersten Seite der nächst kleinere Skalenwert zunehmend größer, heller und/oder kontrastreicher dargestellt und der Einstellwert sowie der nächst größere Skalenwert zunehmend kleiner, dunkler und/oder kontrastärmer dargestellt, während bei einer Verschiebung des Berührungspunktes zur zweiten Seite der nächst größere Skalenwert zunehmend größer, heller und/oder kontrastreicher dargestellt und der Einstellwert sowie der nächst kleinere Skalenwert zunehmend kleiner, dunkler und/oder kontrastärmer dargestellt werden. Auch hier gilt natürlich bezüglich des Wortes "dunkler" wiederum die oben erläuterte Annahme.

Zusätzlich zu dem beschriebenen Verfahren umfasst die vorliegende Erfindung eine berührungsempfindliche Bedienanzeige, die insbesondere für die Bedienung eines Haushaltsgeräts wie z.B. eines Herdes oder einer Waschmaschine vorgesehen sein kann. Die berührungsempfindliche Bedienanzeige umfasst eine Speichereinheit zum Speichern von Daten, wobei die Speichereinheit insbesondere dafür vorgesehen ist, die erwähnte Skala mit mehreren Skalenwerten zu speichern. Wie bereits erwähnt, definiert dabei die Differenz zwischen dem letzten Skalenwert und dem ersten Skalenwert eine Skalenlänge. Zusätzlich umfasst die berührungsempfindliche Bedienanzeige eine Anzeigefläche zum Darstellen zumindest eines Teils der Skala sowie eine Sensorik zum Erkennen eines Berührungspunktes, an dem ein Nutzer die Anzeigefläche berührt. Wie bereits oben beschrieben wurde, weist die Skala auf der Anzeigefläche eine Anzeigelänge auf. Die erfindungsgemäße berührungsempfindliche Bedienanzeige besitzt eine Steuereinheit, die dazu eingerichtet ist, den Skalenwert, der dem Berührungspunkt unter den Skalenwerten am nächsten liegt, als Einstellwert auszuwählen. Ein Bereich der Skala, in dem der Einstellwert liegt, wird dabei als ein aktiver Bereich ausgewählt, während mindestens ein weiterer Bereich der Skala, der jenseits des aktiven Bereichs liegt, als passiver Bereich gewählt wird. Zusätzlich ist die Steuereinheit dafür eingerichtet, die Anzeigefläche derartig anzusteuern, dass wenigstens ein Teil des aktiven Bereichs gegenüber dem passiven Bereich vergrößert dargestellt wird, wobei zumindest der Einstellwert dargestellt wird.

Die oben dargestellten Verfahrensschritte sind analog auf die berührungsempfindliche Bedienanzeige anzuwenden. Insbesondere kann in Ausführungsformen der Bedienanzeige die Steuereinheit dazu eingerichtet sein, die entsprechenden Verfahrensschritte auszuführen.

In einer Ausführungsform speichert die Speichereinheit Programminstruktionen, die von der Steuereinheit ausgeführt werden können, um so die verschiedenen Ausführungsformen des oben dargestellten Verfahrens auszuführen.

Insbesondere kann die Steuereinheit auf diese Weise dazu eingerichtet sein, die Anzeigefläche derartig anzusteuern, dass sie zusätzlich zum Einstellwert mindestens einen weiteren Skalenwert darstellt, der in Abhängigkeit von seinem Abstand zu dem Berührungspunkt kleiner, dunkler und/oder kontrastärmer als der Einstellwert dargestellt ist.

Die berührungsempfindliche Bedienanzeige muss nicht zwingend eine dedizierte Steuereinheit umfassen. Vielmehr kann es sich bei der Steuereinheit der berührungsempfindlichen Bedienanzeige gleichzeitig um die Steuereinheit handeln, die das Hausgerät steuert. Anders ausgedrückt kann also die Steuereinheit dazu eingerichtet sein, ein Haushaltsgerät, wie z.B. einen Herd oder eine Waschmaschine, zu steuern.

Zusätzlich umfasst die vorliegende Erfindung ein Haushaltsgerät mit einer erfindungsgemäßen berührungsempfindlichen Bedienanzeige. Bei dem Haushaltsgerät kann es sich beispielsweise handeln um einen Herd, eine Dunstabzugshaube, eine Waschmaschine, einen Trockner, einen Spüler, einen Kühlschrank, einen Kaffeevollautomaten, einen Staubsauger, eine Klimaanlage oder auch eine Heizungsanlage.

Darüber hinaus umfasst die vorliegende Erfindung ein Computerprogrammprodukt, das Programminstruktionen umfasst, die das beschriebene erfindungsgemäße Verfahren ausführen, wenn sie durch eine Steuereinheit einer berührungsempfindlichen Bedienanzeige ausgeführt werden. Bei dem Computerprogrammprodukt kann es sich beispielsweise um einen Datenträger wie z.B. eine DVD handeln, auf der die Programminstruktionen gespeichert sind. Zu denken ist bei einem Computerprogrammprodukt allerdings auch an ein herunterladbares Datenbündel, wie z.B. ein komprimiertes Archiv, das die erwähnten Programminstruktionen umfasst. Mithilfe des Computerprogrammprodukts kann eine handelsübliche berührungsempfindliche Bedienanzeige in eine erfindungsgemäße Bedienanzeige umgewandelt werden.

Weitere Details und Vorteile von Ausführungsformen der vorliegenden Erfindung werden im Folgenden mit Bezug auf die Figuren erläutert. Dabei zeigen:
- Figur 1: eine Ausführungsform einer erfindungsgemäßen berührungsempfindlichen Bedienanzeige;
- Figur 2: eine Ausführungsform eines erfindungsgemäßen Computerprogrammprodukts;
- Figur 3: eine Ausführungsform eines erfindungsgemäßen Verfahrens;
- Figur 4a-4e: ein Beispiel für einen Bedienvorgang an einer Ausführungsform einer erfindungsgemäßen berührungsempfindlichen Bedienanzeige;
- Figur 5a-5b: ein weiteres Beispiel für einen Bedienvorgang;
- Figur 6: ein Beispiel zur Verdeutlichung des Nachbarwerts in Kombination mit einer aufklappenden Skala;
- Figur 7: ein Beispiel für den nächst kleineren und nächst größeren Skalenwert in Kombination mit einer aufklappenden Skala;
- Figur 8: die aufklappbare Skala aus Figur 7, aufgeklappt in einem anderen Bereich;
- Figur 9: die aufklappbare Skala aus Figur 7, aufgeklappt in noch einem weiteren Bereich;
- Figur 10a-10b: ein Beispiel eines Bedienvorganges an einer Ausführungsform einer erfindungsgemäßen berührungsempfindlichen Bedienanzeige für eine Waschmaschine;

- Figur 11: ein weiteres Beispiel für eine weitere Ausführungsform einer erfindungsgemäßen berührungsempfindlichen Bedienanzeige für eine Waschmaschine;
- Figur 12: ein Beispiel für eine Zeiteinstellung an einer Ausführungsform einer berührungsempfindlichen Bedienanzeige;
- Figur 13: ein Beispiel für eine Ausführungsform einer erfindungsgemäßen berührungsempfindlichen Bedienanzeige, wobei die Skalenwerte nicht Zahlen, sondern Worte umfassen;
- Figur 14: ein Beispiel für eine Ausführungsform einer erfindungsgemäßen Bedienanzeige für eine Waschmaschine;
- Figur 15: eine Ausführungsform eines erfindungsgemäßen Herdes und
- Figur 16: eine Ausführungsform einer erfindungsgemäßen Waschmaschine.

In der folgenden Beschreibung werden gleiche und gleich wirkende Elemente mit denselben Bezugszeichen benannt, sofern nichts anderes angegeben ist.

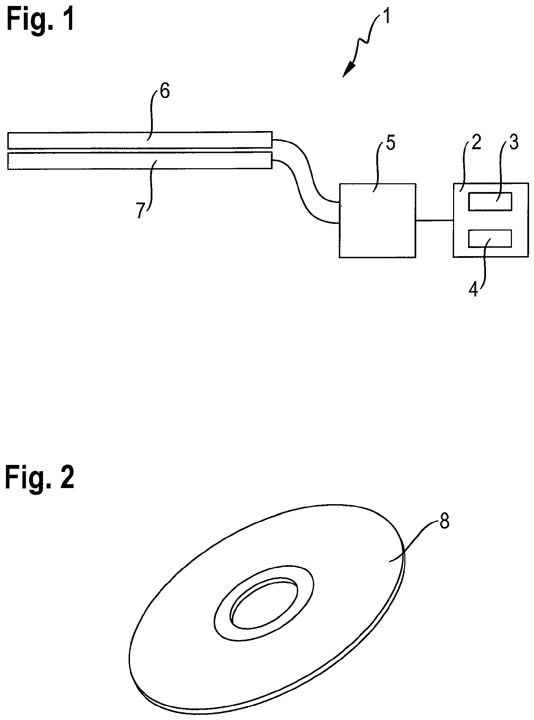

In der Figur 1 ist eine Ausführungsform einer erfindungsgemäßen berührungsempfindlichen Bedienanzeige 1 dargestellt. Diese umfasst eine Speichereinheit 2, die eine Skala 3 mit mehreren Skalenwerten speichert. Eine Differenz zwischen dem letzten Skalenwert und dem ersten Skalenwert definiert dabei eine Skalenlänge. In der Speichereinheit 2 sind zusätzlich Programminstruktionen 4 gespeichert, die das erfindungsgemäße Verfahren ausführen können. Hierfür müssen die Programminstruktionen 4 von einer Steuereinheit 5 der berührungsempfindlichen Bedienanzeige 1 ausgeführt werden. Die Steuereinheit 5 kann eine Anzeigefläche 6 derartig ansteuern, dass sie zumindest einen Teil der Skala darstellt. Unter der Anzeigefläche 6 ist eine Sensorik 7 angeordnet, die einen Berührungspunkt des Nutzers auf der Anzeigefläche 6 erkennen kann. Wenn ein Nutzer nun die Anzeigefläche 6 berührt, erkennt die Sensorik den Berührungspunkt des Nutzers und die Steuereinheit 5 wählt den Skalenwert als Einstellwert aus, der dem Berührungspunkt unter den Skalenwerten am nächsten liegt. Der Bereich, in dem der Einstellwert liegt, ist dann der aktive Bereich der Skala. Dieser wird auf der Anzeigefläche 6 gegenüber dem passiven Bereich der Skala vergrößert dargestellt.

In Figur 2 ist eine Ausführungsform eines erfindungsgemäßen Computerprogrammprodukts in Form einer DVD 8 illustriert, wobei auf der DVD 8 die Programminstruktionen 4 gespeichert sind. Die DVD 8 kann also in einen DVD-Leser eingelegt werden, um auf diese Weise die Programminstruktionen 4 auszulesen und in die Speichereinheit einer handelsüblichen berührungsempfindlichen Bedienanzeige einzuspeichern. Auf diese Weise kann mit Hilfe einer handelsüblichen berührungsempfindlichen Bedienanzeige eine erfindungsgemäße Bedienanzeige erzeugt werden.

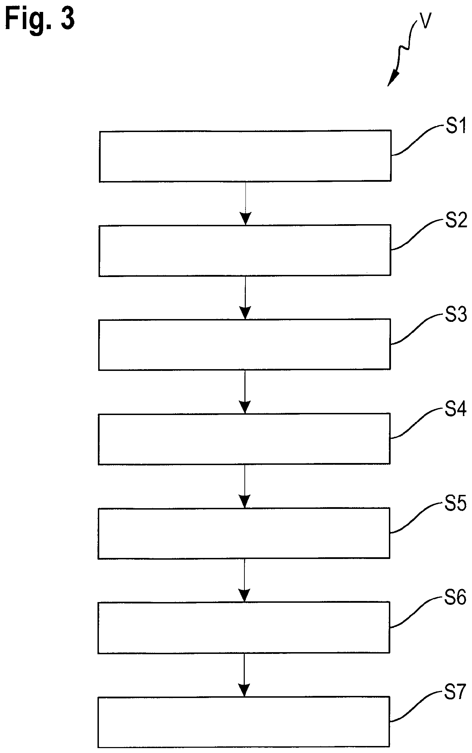

In der Figur 3 ist eine Ausführungsform eines erfindungsgemäßen Verfahrens dargestellt. Das gezeigte Verfahren V dient der Verbesserung einer Bedienbarkeit einer Skala einer berührungsempfindlichen Bedienanzeige. Die Skala weist dabei mehrere Skalenwerte auf, wobei eine Differenz zwischen dem letzten Skalenwert und dem ersten Skalenwert eine Skalenlänge definiert. In Schritt S1 wird zunächst zumindest ein Teil der Skala auf einer Anzeigefläche der berührungsempfindlichen Bedienanzeige dargestellt, wobei die Skala auf der Anzeigefläche eine Anzeigelänge aufweist. In Schritt S2 wird dann ein Berührungspunkt erkannt, an dem ein Nutzer die Anzeigefläche berührt. In Schritt S3 wird der Skalenwert ausgewählt, der den Berührungspunkt unter den Skalenwerten am nächsten liegt. Dieser Skalenwert wird der Einstellwert, wobei ein Bereich der Skala, in dem der Einstellwert liegt, als aktiver Bereich und mindestens ein weiterer Bereich der Skala, der jenseits des aktiven Bereichs liegt, als passiver Bereich ausgewählt wird.

In Schritt S4 wird dann wenigstens ein Teil des aktiven Bereiches gegenüber dem passiven Bereich auf der Anzeigefläche vergrößert dargestellt. Zunächst erfolgt dabei eine Darstellung des Einstellwertes. In Schritt S5 wird erkannt, dass der Nutzer die Anzeigefläche nicht nur leicht berührt und den Finger anschließend sofort wieder entfernt hat, sondern dass er den Finger dauerhaft auf der Anzeige belassen hat, um ihn möglicherweise zu verschieben. Dementsprechend wird in Schritt S5 der nächst kleinere Skalenwert in Bezug auf den Einstellwert links des Einstellwertes auf der Anzeigefläche dargestellt, während der nächst größere Skalenwert in Bezug auf den Skalenwert rechts des Einstellwertes auf der Anzeigefläche dargestellt wird. Es erfolgt dabei eine vergrößerte Darstellung. Anders ausgedrückt ist der dargestellte Abstand zwischen dem nächst kleineren Skalenwert und dem nächst größeren Skalenwert überproportional groß gemessen an der Anzeigelänge. Man kann diesen Umstand auch derartig beschreiben, dass der dargestellte Abstand zwischen dem nächst kleineren Skalenwert und dem nächst größeren Skalenwert auf der Anzeigefläche geteilt durch die Anzeigelänge größer ist als ein theoretischer Abstand zwischen dem nächst kleineren Skalenwert und dem nächst größeren Skalenwert geteilt durch die Skalenlänge.

In Schritt S6 wird dann eine Verschiebung des Berührungspunktes, an dem ein Nutzer die Anzeigefläche berührt, erkannt. Man könnte dies auch einfach so ausdrücken, dass ein neuer Berührungspunkt erkannt wird. Basierend auf dem neuen Berührungspunkt wird in Schritt S7 dann entsprechend die Darstellung angepasst. Das heißt, dass bei einer Verschiebung des Berührungspunktes zur ersten Seite der nächst kleinere Skalenwert zunehmend größer, heller und/oder kontrastreicher dargestellt und der Einstellwert sowie der nächst größere Skalenwert zunehmend kleiner, dunkler und/oder kontrastärmer dargestellt werden. Erfolgt die Verschiebung des Berührungspunktes hingegen zur zweiten Seite, wird der nächst größere Skalenwert zunehmend größer, heller und/oder kontrastreicher dargestellt, während der Einstellwert sowie der nächst kleinere Skalenwert zunehmend kleiner, dunkler und/oder kontrastärmer dargestellt werden.

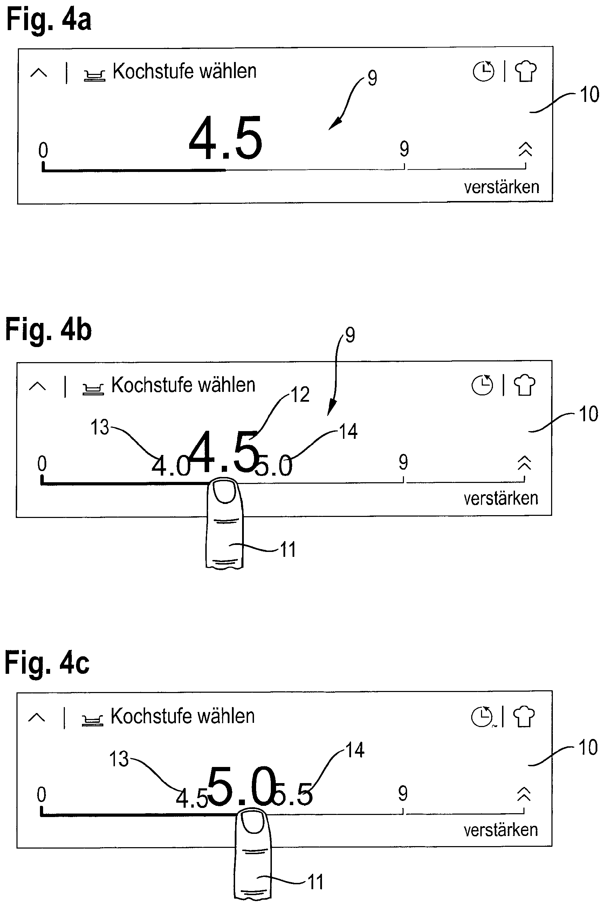

Ausführungsformen des erfindungsgemäßen Verfahrens sollen nun anhand der in den Figuren 4a bis 14 gezeigten Anzeigeflächen erläutert werden. In der Figur 4a ist eine Ausführungsform einer Darstellung der Skala 9 auf der Anzeigefläche 10 gezeigt. Die Skala 9 weist die Skalenwerte 0 bis 9 auf, wobei die Skalenwerte jeweils einen Abstand von 0,5 besitzen. Die Skala 9 hat also eine Skalenlänge von 19. Die in Figur 4a gezeigte Skala 9 erlaubt die Einstellung einer Kochstufe und illustriert somit eine berührungsempfindliche Bedienanzeige für einen Herd. Die Skala 9 wurde bereits von einem Nutzer angetippt, so dass der Einstellwert 4,5 angezeigt wird.

In Figur 4b berührt der Nutzer die Skala 9 mit seinem Finger 11. Die Berührung führt dazu, dass neben dem Einstellwert 12 auf der linken Seite der nächst kleinere Skalenwert 13 und rechts neben dem Einstellwert 12 der nächst größere Skalenwert 14 gezeigt werden. Wie der Figur 4b entnommen werden kann, sind der nächst kleinere Skalenwert und der nächst größere Skalenwert gegenüber dem Einstellwert unauffälliger dargestellt. Im vorliegenden Beispiel sind sie sowohl kleiner als auch kontrastärmer dargestellt. Eine klassische Bedienanzeige eines Kochfeldes ist in der Regel dunkel (nahezu schwarz), wobei die angezeigten Werte auf dieser Bedienanzeige hell dargestellt sind. Vor diesem Hintergrund sind die in den Ansprüchen gebrauchten Begriffe dunkler und heller zu verstehen. Wenn im Rahmen der hier vorliegenden Offenbarung also davon gesprochen wird, dass ein Wert zunehmend kleiner, dunkler und/oder kontrastärmer dargestellt wird, so kann darunter verstanden werden, dass der Wert zunehmend weniger auffällig dargestellt wird. Wenn hingegen davon die Rede ist, dass ein Wert zunehmend größer, heller und/oder kontrastreicher dargestellt wird, so ist darunter insbesondere zu verstehen, dass der Wert auffälliger dargestellt wird.

Der Effekt einer Verschiebung des Fingers 11 ist in der Figur 4c gut zu sehen. Der Finger 11 befindet sich auf der Skala irgendwo zwischen 5,0 und 5,5, wobei der Finger 11 näher an der 5,0 als an der 5,5 dran ist. Aufgrund dieser Lage des Fingers 11 wird im vorliegenden Beispiel der nächst größere Skalenwert 14 größer und auffälliger dargestellt als der nächst kleinere Skalenwert 13. Mit einer zunehmenden Verschiebung des Fingers 11 in Richtung des nächst größeren Skalenwertes 14 würde dieser Effekt noch zunehmen. Dadurch entsteht ein karussellartiger Eindruck beim Nutzer, wenn er seinen Finger 11 verschiebt.

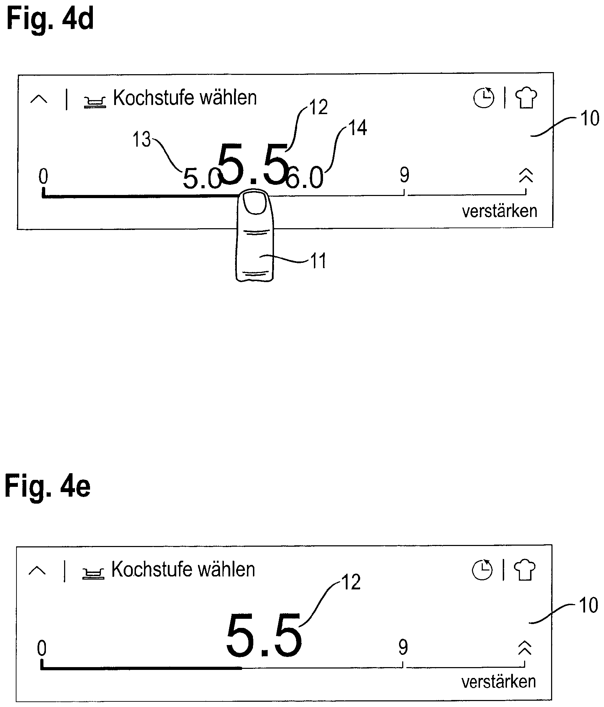

In Figur 4d wurde der Finger 11 weiter bis zur 5,5 verschoben, so dass der nächst kleinere Skalenwert 13 nicht mehr durch die 4,5, sondern durch die 5,0 gebildet wird. Als nächst größerer Skalenwert 14 ist jetzt die 6,0 zu sehen. In der Figur 4e wurde der Finger entfernt, so dass nur noch der Einstellwert 5,5 zu sehen ist.

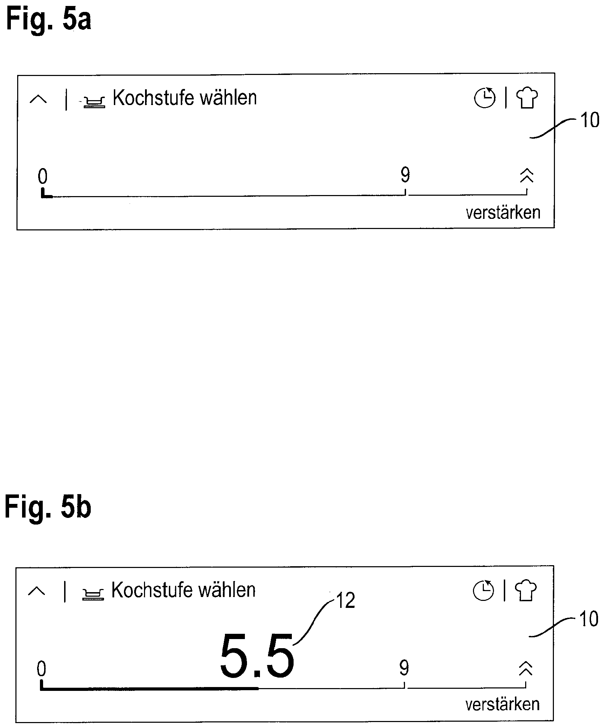

In der Figur 5a ist eine Anzeigefläche gezeigt, die noch nicht berührt wurde. Dementsprechend wird noch kein Einstellwert gezeigt. Die Figur 5b illustriert dieselbe Anzeigefläche, nachdem die dort dargestellte Skala in der Nähe der 5,5 berührt wurde. Deutlich zu sehen ist der Einstellwert 5,5, der gegenüber der 0 und der 9 deutlich vergrößert dargestellt ist.

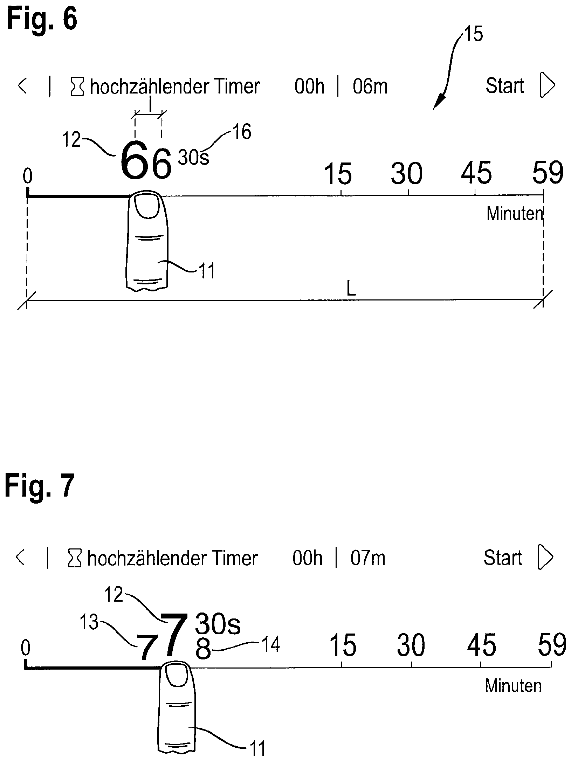

In der Figur 6 ist eine Ausführungsform einer berührungsempfindlichen Bedienanzeige illustriert, die das Prinzip der Vergrößerung gleich doppelt verkörpert. Die Skala 15 dient der Einstellung einer Zeit zwischen 0 und 59 Minuten, wobei die Skalenwerte einen Abstand von 30 Sekunden aufweisen. Dementsprechend beträgt die Skalenlänge 119. Der Finger 11 befindet sich zwischen 6 und 6 1/2 Minuten, wobei er näher an den 6 Minuten dran ist. Neben dem Einstellwert 12 ist ein Nachbarwert 16 gezeigt, der gegenüber dem Einstellwert 12 weniger auffällig dargestellt ist. Zu beachten ist, dass der dargestellte Abstand ℓ zwischen dem Einstellwert 12 und dem Nachbarwert 16 geteilt durch die Anzeigelänge L größer ist als theoretische Abstand zwischen dem Einstellwert 12 und dem Nachbarwert 16 geteilt durch die Skalenlänge.

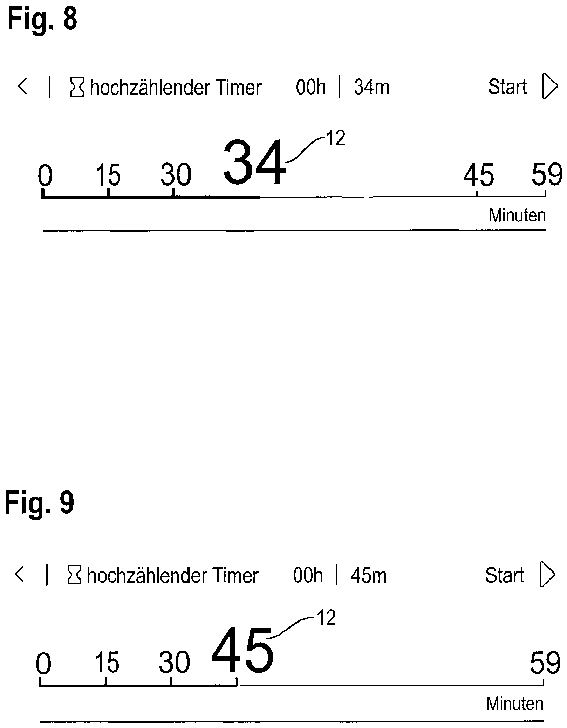

In der Figur 7 ist im Vergleich zur Figur 6 eine recht ähnliche Skala illustriert, wobei neben dem Einstellwert 12 sowohl ein nächst kleinerer Skalenwert 13 als auch ein nächst größerer Skalenwert 14 gezeigt sind. Wenn der Nutzer jetzt mit seinem Finger 11 zwischen die 30 und 45 tippt, so wird der passive Bereich zwischen der 30 und 45 zum aktiven Bereich und wird entsprechend vergrößert dargestellt, wie die Figur 8 illustriert. Die berührungsempfindliche Bedienanzeige erkennt spontan den Berührungspunkt und weist dem Einstellwert 12 die 34 zu. Natürlich könnte der Nutzer mit seinem Finger 11 den Einstellwert jetzt noch ändern. Wenn er hingegen den Finger von der Anzeigefläche hoch nimmt und einfach auf die 45 tippt, so wird der passive Bereich zwischen der 45 und der 59 zum aktiven Bereich und wird entsprechend aufgeklappt, wie die Figur 9 illustriert.

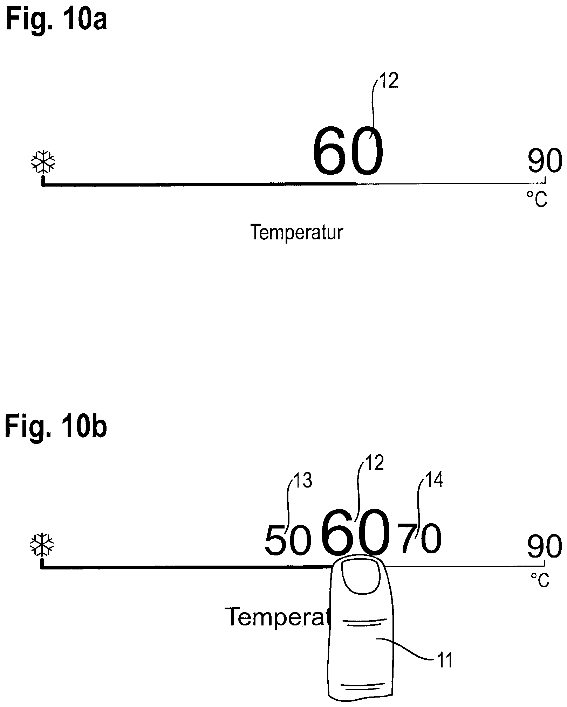

In der Figur 10a ist eine Ausführungsform einer berührungsempfindlichen Bedienanzeige für eine Waschmaschine dargestellt. Als Einstellwert 12 ist eine Temperatur von 60°C ausgewählt. In der Figur 10b legt der Nutzer seinen Finger 11 auf den Einstellwert 12, so dass wiederum der nächst kleinere Skalenwert 13 und der nächst größere Skalenwert 14 eingeblendet werden.

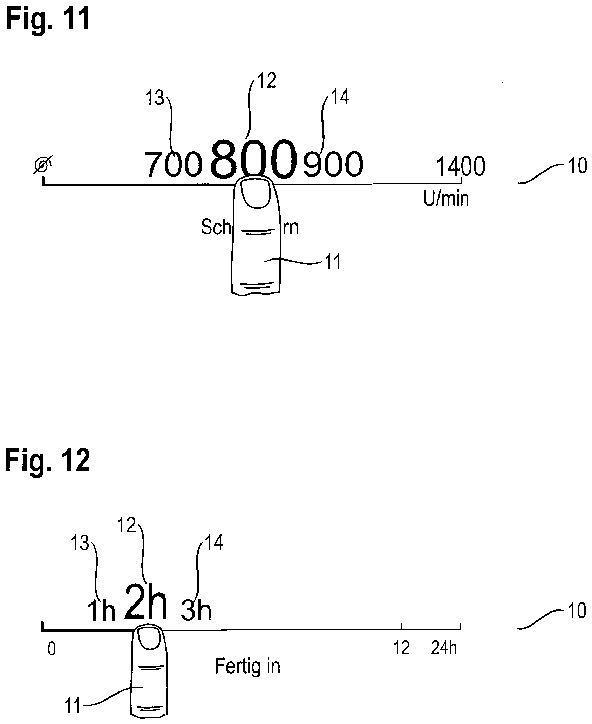

Für dieselbe Waschmaschine kann auch die in Figur 11 dargestellte Bedienanzeige vorgesehen sein, mit deren Hilfe die Umdrehungszahl für den Schleudergang eingestellt werden kann. Der Finger 11 berührt die Anzeigefläche 10 bei einer Schleuderzahl von 800 Umdrehungen pro Minute, wobei als nächst kleinerer Skalenwert 700 und als nächst größerer Skalenwert 900 Umdrehungen pro Minute eingeblendet werden.

In der Figur 12 ist eine Bedienanzeige illustriert, mit deren Hilfe eine Zeit in Stunden eingestellt werden kann. Während der Einstellwert 12 bei 2 Stunden liegt, werden als nächst kleinerer Skalenwert 1 Stunde und als nächst größerer Skalenwert 3 Stunden angezeigt.

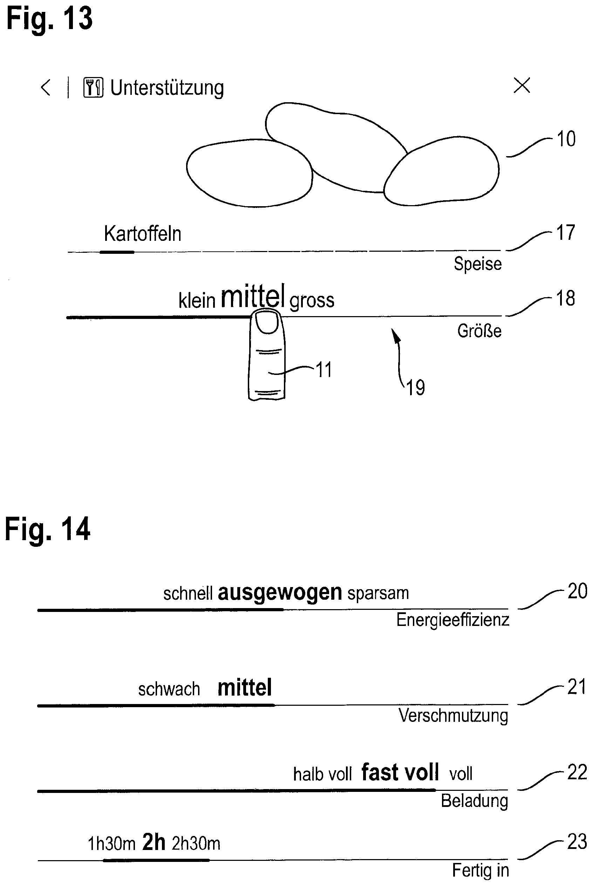

Die Skalenwerte müssen nicht unbedingt Zahlen sein. Vielmehr ist es genauso denkbar, dass die Skalenwerte aus Worten bzw. Begriffen bestehen. In der Figur 13 ist eine Anzeigefläche 10 dargestellt, die der Einstellung einer Kochstufe an einem Herd dient. In einem ersten Einstellbereich 17 kann eine zu kochende Speise ausgewählt werden. Im dargestellten Fall sollen Kartoffeln gekocht werden. Basierend auf der Auswahl im oberen Einstellbereich 17 wird in einem unteren Einstellbereich 18 die Skala 19 eingeblendet. In dieser Skala 19 kann die Größe der Kartoffeln gewählt werden. Im vorliegenden Beispiel ist der Einstellwert "mittel" ausgewählt, wobei links der nächst kleinere Skalenwert "klein" und rechts der nächst größere Skalenwert "groß" dargestellt sind. Basierend auf dieser Auswahl der Größe der Kartoffeln wird eine Kochstufe ermittelt, die für den gewählten Anwendungsfall optimal ist.

Ein ähnliches Prinzip kann auch für eine Waschmaschine herangezogen werden. In der Figur 14 ist eine Ausführungsform einer Anzeigefläche einer berührungsempfindlichen Bedienanzeige für eine Waschmaschine illustriert. Diese weist vier Einstellbereiche 20 bis 23 auf. In einem ersten Einstellbereich 20 kann ausgewählt werden, ob es dem Nutzer wichtiger ist, dass die Wäsche besonders sparsam gewaschen oder besonders schnell gewaschen wird. In einem zweiten Einstellbereich 21 kann der Verschmutzungsgrad der Wäsche gewählt werden. Im dritten Einstellbereich 22 ist es dem Nutzer möglich einzustellen, wie stark die Waschmaschine beladen ist. Im vierten Einstellbereich 23 wiederum kann eine gewünschte Waschlänge angegeben werden. Auch aus dieser Darstellung wird deutlich, dass die Skalenwerte nicht unbedingt als Zahlen ausgedrückt sein müssen. Auch rein sprachliche, qualitative Skalenwerte sind möglich.

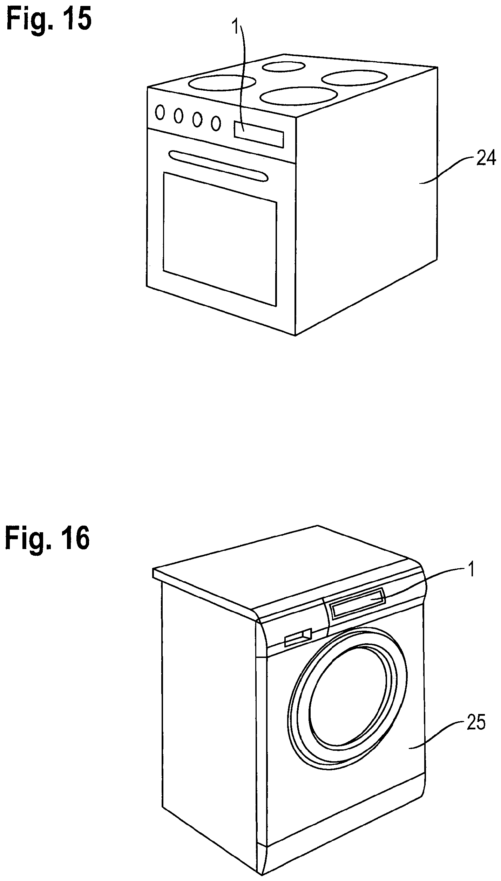

In der Figur 15 ist eine Ausführungsform eines erfindungsgemäßen Herdes 24 gezeigt, der eine Ausführungsform einer berührungsempfindlichen Bedienanzeige 1 umfasst.

In der Figur 16 wiederum ist eine Ausführungsform einer erfindungsgemäßen Waschmaschine 25 illustriert, die wiederum eine Ausführungsform einer erfindungsgemäßen berührungsempfindlichen Bedienanzeige 1 aufweist.

Die mit Bezug auf die Figuren gemachten Erläuterungen sind rein illustrativ und nicht beschränkend zu verstehen. An den gezeigten Ausführungsformen können viele Änderungen vorgenommen werden, ohne den Schutzbereich der Erfindung, wie er in den beigefügten Patentansprüchen dargelegt ist, zu verlassen.

### Bezugszeichenliste

- 1: Ausführungsform einer berührungsempfindlichen Bedienanzeige
- 2: Speichereinheit
- 3: Skala
- 4: Programminstruktionen
- 5: Steuereinheit
- 6: Anzeigefläche
- 7: Sensorik
- 8: DVD
- 9: Skala
- 10: Anzeigefläche
- 11: Finger
- 12: Einstellwert
- 13: nächst kleinerer Skalenwert
- 14: nächst größerer Skalenwert
- 15: Skala
- 16: Nachbarwert
- 17: oberer Einstellbereich
- 18: unterer Einstellbereich
- 19: Skala
- 20: erster Einstellbereich
- 21: zweiter Einstellbereich
- 22: dritter Einstellbereich
- 23: vierter Einstellbereich
- 24: Herd
- 25: Waschmaschine
- ℓ: dargestellter Abstand
- L: Anzeigelänge
- S1: Darstellen zumindest eines Teils der Skala
- S2: Erkennen eines Berührungspunktes
- S3: Auswählen des Skalenwertes, der dem Berührungspunkt am nächsten liegt
- S4: vergrößertes Darstellen wenigstens eines Teils des aktiven Bereichs

- S5: Darstellen des nächst kleineren Skalenwertes und des nächst größeren Skalenwertes
- S6: Erkennen eines Berührungspunktes nach einer Verschiebung des Fingers
- S7: Anpassen der Darstellung an den neuen Berührungspunkt
- V: Ausführungsform eines erfindungsgemäßen Verfahrens

## Patentansprüche

1. Verfahren (V) zum Betrieb eines Haushaltsgerätes wie einem Herd oder einer Waschmaschine (25) mit einer berührungsempfindlichen Bedienanzeige (1) durch das Verbessern einer Bedienbarkeit einer Skala (9, 15, 19) der berührungsempfindlichen Bedienanzeige (1), indem ein Bereich der Skala, in dem eine Einstellung vorgenommen werden soll, vergrößert dargestellt wird, wobei die Skala mehrere Skalenwerte aufweist und eine Differenz zwischen dem letzten Skalenwert und dem ersten Skalenwert eine Skalenlänge definiert, mit den Schritten
- Darstellen zumindest eines Teils der Skala (S1) auf einer Anzeigefläche (6, 10) der berührungsempfindlichen Bedienanzeige (1), wobei die Skala auf der Anzeigefläche eine Anzeigelänge (L) aufweist,
- Erkennen eines Berührungspunktes (S2), an dem ein Nutzer die Anzeigefläche (6, 10) berührt,
- Auswählen des Skalenwertes (S3), der dem Berührungspunkt unter den Skalenwerten am nächsten liegt, als Einstellwert (12), wobei ein Bereich der Skala, in dem der Einstellwert liegt, als aktiver Bereich und mindestens ein weiterer Bereich der Skala, der jenseits des aktiven Bereichs liegt, als passiver Bereich gewählt wird, und
- Vergrößertes Darstellen wenigstens eines Teils des aktiven Bereichs (S4) gegenüber dem passiven Bereich auf der Anzeigefläche (6, 10), wobei zumindest der Einstellwert (12) dargestellt wird,
- Auswählen des Skalenwertes, der dem Berührungspunkt unter den Skalenwerten am zweitnächsten liegt, als Nachbarwert (16), wobei der aktive Bereich den Nachbarwert (16) umfasst, und
- Darstellen des Nachbarwerts (16) auf der Anzeigefläche (6, 10), wobei der Nachbarwert (16) auf einer ersten Seite des Einstellwertes (12) auf der Anzeigefläche dargestellt wird, wenn der Nachbarwert kleiner als der Einstellwert ist, und auf einer der ersten Seite gegenüberliegenden zweiten Seite des Einstellwertes (12) dargestellt wird, wenn der Nachbarwert größer als der Einstellwert ist,
- wobei ein dargestellter Abstand (ℓ) zwischen dem Einstellwert (12) und dem Nachbarwert (16) auf der Anzeigefläche (6, 10) geteilt durch die Anzeigelänge (L) größer ist als ein theoretischer Abstand zwischen dem Einstellwert (12) und dem Nachbarwert (16) geteilt durch die Skalenlänge,
- Erkennen einer Verschiebung des Berührpunktes (S2), an dem der Nutzer die Anzeigefläche berührt, wobei der Nachbarwert (16) in Abhängigkeit von seinem Abstand zu dem Berührungspunkt gegenüber dem Einstellwert (12) kleiner, dunkler und/oder kontrastärmer dargestellt ist, **dadurch gekennzeichnet, dass** ein Faktor, um den der aktive Bereich gegenüber dem passiven Bereich vergrößert ist, an eine Größe des Fingers angepasst ist und/oder vom Anpressdruck am Berührungspunkt abhängig ist.

2. Verfahren nach dem vorhergehenden Anspruch, wobei die Skala in eine bestimmte Anzahl von Bereichen eingeteilt ist, die vor der ersten Berührung der Anzeigefläche (6, 10) durch den Nutzer alle gleich groß dargestellt werden.

3. Verfahren nach einem der vorhergehenden Ansprüche, wobei durch eine Berührung eines passiven Bereichs dieser zum aktiven Bereich und der bislang aktive Bereich zu einem passiven Bereich wird.

4. Verfahren nach einem der vorhergehenden Ansprüche 1 bis 3, wobei der aktive Bereich einen nächst kleineren Skalenwert (13) in Bezug auf den Einstellwert (12) und einen nächst größeren Skalenwert (14) in Bezug auf den Einstellwert (12) umfasst, wobei das vergrößerte Darstellen des aktiven Bereichs umfasst
- Darstellen des nächst kleineren Skalenwertes (13) auf einer ersten Seite des Einstellwertes (12) auf der Anzeigefläche und
- Darstellen des nächst größeren Skalenwertes (14) in Bezug auf den Einstellwert auf einer der ersten Seite gegenüberliegenden zweiten Seite des Einstellwertes (12) auf der Anzeigefläche,
- wobei ein dargestellter Abstand (ℓ) zwischen dem nächst kleineren Skalenwert (13) und dem nächst größeren Skalenwert (14) auf der Anzeigefläche geteilt durch die Anzeigelänge (L) größer ist als ein theoretischer Abstand zwischen dem nächst kleineren Skalenwert und dem nächst größeren Skalenwert geteilt durch die Skalenlänge,
- und wobei der nächst kleinere Skalenwert (13) und der nächst größere Skalenwert (14) in Abhängigkeit von ihren Abständen zu dem Berührungspunkt gegenüber dem Einstellwert (12) kleiner, dunkler und/oder kontrastärmer dargestellt sind.

5. Verfahren nach einem der vorhergehenden Ansprüche 1 bis 4, wobei bei einer Verschiebung des Berührungspunktes in Richtung des Nachbarwerts (16) der Nachbarwert zunehmend größer, heller und/oder kontrastreicher und der Einstellwert (12) zunehmend kleiner, dunkler und/oder kontrastärmer dargestellt wird beziehungsweise bei einer Verschiebung des Berührungspunktes zur ersten Seite der nächst kleinere Skalenwert (13) zunehmend größer, heller und/oder kontrastreicher dargestellt und der Einstellwert (12) sowie der nächst größere Skalenwert (14) zunehmend kleiner, dunkler und/oder kontrastärmer dargestellt werden, während bei einer Verschiebung des Berührungspunktes zur zweiten Seite der nächst größere Skalenwert (14) zunehmend größer, heller und/oder kontrastreicher dargestellt und der Einstellwert (12) sowie der nächst kleinere Skalenwert (13) zunehmend kleiner, dunkler und/oder kontrastärmer dargestellt werden.

6. Verfahren nach einem der vorhergehenden Ansprüche, wobei die Skalenwerte Zahlen umfassen.

7. Verfahren nach einem der vorhergehenden Ansprüche, wobei die Skalenwerte mindestens ein Wort umfassen.

8. Berührungsempfindliche Bedienanzeige (1) eines Haushaltsgerätes wie einem Herd (24) oder einer Waschmaschine (25), mit
- einer Speichereinheit (2) zum Speichern einer Skala (3) mit mehreren Skalenwerten, wobei eine Differenz zwischen dem letzten Skalenwert und dem ersten Skalenwert eine Skalenlänge definiert,
- einer Anzeigefläche (6) zum Darstellen zumindest eines Teils der Skala, wobei die Skala auf der Anzeigefläche eine Anzeigelänge (L) aufweist,
- einer Sensorik (7) zum Erkennen eines Berührungspunktes, an dem ein Nutzer die Anzeigefläche (6) berührt, und
- einer Steuereinheit (5), die dazu eingerichtet ist,
a) den Skalenwert, der dem Berührungspunkt unter den Skalenwerten am nächsten liegt, als Einstellwert (12) auszuwählen, wobei ein Bereich der Skala, in dem der Einstellwert liegt, als aktiver Bereich und mindestens ein weiterer Bereich der Skala, der jenseits des aktiven Bereichs liegt, als passiver Bereich gewählt wird, und
b) die Anzeigefläche (6) derartig anzusteuern, dass wenigstens ein Teil des aktiven Bereichs gegenüber dem passiven Bereich vergrößert dargestellt wird, wobei zumindest der Einstellwert (12) dargestellt wird,
- wobei die Steuereinheit (5) weiterhin dazu eingerichtet ist, die Anzeigefläche (6) derartig anzusteuern, dass sie zusätzlich zum Einstellwert (12) mindestens einen weiteren Skalenwert (13, 14, 16) darstellt, der in Abhängigkeit von seinem Abstand zu dem Berührungspunkt kleiner, dunkler und/oder kontrastärmer als der Einstellwert (12) dargestellt ist,
- wobei die Steuereinheit (5) gleichzeitig das Haushaltsgerät steuert,
- wobei die Sensorik (7) dazu eingerichtet ist, eine Verschiebung des Berührpunktes, an dem der Nutzer die Anzeigefläche berührt, zu erkennen,
- und wobei die berührungsempfindliche Bedienanzeige (1) so eingerichtet ist, dass ein Faktor, um den der aktive Bereich gegenüber dem passiven Bereich vergrößert ist, an eine Größe des Fingers angepasst ist und/oder vom Anpressdruck am Berührungspunkt abhängig ist.

9. Bedienanzeige nach dem vorhergehenden Anspruch, wobei die Speichereinheit (2) Programminstruktionen (4) speichert, die von der Steuereinheit (5) ausgeführt werden können, um so das Verfahren nach einem der Ansprüche 1 bis 7 auszuführen.

10. Bedienanzeige nach einem der vorhergehenden Ansprüche 8 oder 9, wobei die Steuereinheit (5) weiterhin dazu eingerichtet ist, ein Haushaltsgerät, insbesondere einen Herd (24) oder eine Waschmaschine (25), zu steuern.

11. Haushaltsgerät, insbesondere Herd (24) oder Waschmaschine (25), mit einer berührungsempfindlichen Bedienanzeige (1) nach einem der vorhergehenden Ansprüche 8 bis 10.

12. Computerprogrammprodukt (8), insbesondere Datenträger mit Software oder herunterladbares Datenbündel, das Programminstruktionen (4) umfasst, die das Verfahren (V) nach einem der Ansprüche 1 bis 7 ausführen, wenn sie durch eine Steuereinheit (5) einer berührungsempfindlichen Bedienanzeige (1) ausgeführt werden.

## Claims

1. Method (V) for operating a household appliance, such as a cooker or a washing machine (25), with a touch-sensitive operating display (1), by way of the improvement of an operability of a scale (9, 15, 19) of the touch-sensitive operating display (1) by a region of the scale, in which a setting is to be made, being shown in an enlarged manner, wherein the scale has a plurality of scale values and a difference between the final scale value and the first scale value defines a scale length, with the steps:
- showing at least a part of the scale (S1) on a display area (6, 10) of the touch-sensitive operating display (1), wherein the scale has a display length (L) on the display area,
- identifying a touch point (S2), at which a user touches the display area (6, 10),
- selecting the scale value (S3), which lies closest to the touch point among the scale values, as setting value (12), wherein a region of the scale, in which the setting value lies, is chosen to be the active region and at least one further region of the scale that lies beyond the active region is chosen to be the passive region, and
- showing at least a part of the active region (S4) in an enlarged manner compared to the passive region on the display area (6, 10), wherein at least the setting value (12) is shown,
- selecting the scale value, which lies second-closest to the touch point among the scale values, as neighbouring value (16), wherein the active region comprises the neighbouring region (16), and
- showing the neighbouring value (16) on the display area (6, 10), wherein the neighbouring value (16) is shown on a first side of the setting value (12) on the display area, when the neighbouring value is less than the setting value, and on a second side of the setting value (12) opposite the first side, when the neighbouring value is greater than the setting value,
- wherein a distance (f) shown between the setting value (12) and the neighbouring value (16) on the display area (6, 10) divided by the display length (L) is greater than a theoretical distance between the setting value (12) and the neighbouring value (16) divided by the scale length,
- identifying a displacement of the touch point (S2), at which the user touches the display area, wherein the neighbouring value (16) is shown smaller, darker and/or with less contrast depending on its distance from the touch point in relation to the setting value (12),
**characterised in that** a factor, by which the active region is enlarged compared to the passive region, is adapted to a size of the finger and/or depends upon the contact pressure at the touch point.

2. Method according to the preceding claim, wherein the scale is divided into a determined number of regions, which are all shown as the same size before the first touch of the display area (6, 10) by the user.

3. Method according to one of the preceding claims, wherein by touching a passive region, this becomes the active region and the previously active region becomes a passive region.

4. Method according to one of the preceding claims 1 to 3, wherein the active region comprises a next-smallest scale value (13) in relation to the setting value (12) and a next-largest scale value (14) in relation to the setting value (12), wherein the showing of the active region in an enlarged manner comprises
- showing the next-smallest scale value (13) on a first side of the setting value (12) on the display area and
- showing the next-largest scale value (14) in relation to the setting value on a second side of the setting value (12) opposite the first side on the display area,
- wherein a distance (f) shown between the next-smallest scale value (13) and the next-largest scale value (14) on the display area divided by the display length (L) is greater than a theoretical distance between the next-smallest scale value and the next-largest scale value divided by the scale length,
- and wherein the next-smallest scale value (13) and the next-largest scale value (14) are shown smaller, darker and/or with less contrast depending on their distances from the touch point in relation to the setting value (12).

5. Method according to one of the preceding claims 1 to 4, wherein when the touch point is displaced in the direction of the neighbouring value (16), the neighbouring value is shown increasingly larger, brighter and/or with more contrast and the setting value (12) is shown increasingly smaller, darker and/or with less contrast, or when the touch point is displaced towards the first side, the next-smallest scale value (13) is shown increasingly larger, brighter and/or with more contrast and the setting value (12) and the next-largest scale value (14) is shown increasingly smaller, darker and/or with less contrast, whereas when the touch point is displaced towards the second side, the next-largest scale value (14) is shown increasingly larger, brighter and/or with more contrast and the setting value (12) and the next-smallest scale value (13) are shown increasingly smaller, darker and/or with less contrast.

6. Method according to one of the preceding claims, wherein the scale values comprise numbers.

7. Method according to one of the preceding claims, wherein the scale values comprise at least one word.

8. Touch-sensitive operating display (1) of a household appliance, such as a cooker (24) or a washing machine (25), with
- a memory unit (2) for storing a scale (3) with a plurality of scale values, wherein a difference between the last scale value and the first scale value defines a scale length,
- a display area (6) for showing at least a part of the scale, wherein the scale has a display length (L) on the display area,
- a sensor system (7) for identifying a touch point, at which a user touches the display area (6), and
- a control unit (5), which is configured
a) to select the scale value, which lies closest to the touch point among the scale values, as setting value (12), wherein a region of the scale, in which the setting value lies, is chosen to be the active region and at least one further region of the scale that lies beyond the active region is chosen to be the passive region, and
b) to actuate the display area (6) in such a manner that at least a part of the active region is shown in an enlarged manner compared to the passive region, wherein at least the setting value (12) is shown,
- wherein the control unit (5) is furthermore configured to actuate the display area (6) in such a manner that it shows, in addition to the setting value (12), at least one further scale value (13, 14, 16), which is shown smaller, darker and/or with less contrast than the setting value (12) depending on its distance from the touch point,
- wherein the control unit (5) controls the household appliance at the same time,
- wherein the sensor system (7) is configured to identify a displacement of the touch point, at which the user touches the display area,
- and wherein the touch-sensitive operating display (1) is configured such that a factor, by which the active region is enlarged compared to the passive region, is adapted to a size of the finger and/or depends upon the contact pressure at the touch point.

9. Operating display according to the preceding claim, wherein the memory unit (2) stores program instructions (4), which may be carried out by the control unit (5), in order thus to carry out the method according to one of claims 1 to 7.

10. Operating display according to one of the preceding claims 8 or 9, wherein the control unit (5) is furthermore configured to control a household appliance, in particular a cooker (24) or a washing machine (25).

11. Household appliance, in particular cooker (24) or washing machine (25), with a touch-sensitive operating display (1) according to one of the preceding claims 8 to 10.

12. Computer program product (8), in particular data carrier with software or downloadable data bundle, which comprises program instructions (4) which carry out the method (V) according to one of claims 1 to 7 when they are carried out by a control unit (5) of a touch-sensitive operating display (1).

## Revendications

1. Procédé (V) de fonctionnement d'un appareil ménager, comme une cuisinière ou un lave-linge (25) comprenant un affichage de commande (1) tactile, au moyen de l'amélioration d'une facilité d'utilisation d'une échelle (9, 15, 19) de l'affichage de commande (1) tactile du fait qu'une zone de l'échelle, dans laquelle un réglage doit être effectué, est représentée de manière agrandie, dans lequel l'échelle présente plusieurs valeurs d'échelle et définit une différence entre la dernière valeur d'échelle et la première valeur d'échelle d'une longueur d'échelle, comprenant les étapes
- représentation au moins d'une partie de l'échelle (S1) sur une surface d'affichage (6, 10) de l'affichage de commande (1) tactile, l'échelle présentant une longueur d'affichage (L) sur la surface d'affichage,
- identification d'un point de contact (S2) auquel un utilisateur touche la surface d'affichage (6, 10),
- sélection de la valeur d'échelle (S3) qui est la plus proche du point de contact parmi les valeurs d'échelle, en tant que valeur de réglage (12), une zone de l'échelle, dans laquelle la valeur de réglage est située, étant sélectionnée comme zone active, et au moins une zone supplémentaire de l'échelle, laquelle est située au-delà de la zone active, étant sélectionnée comme zone passive, et
- représentation agrandie sur la surface d'affichage (6, 10) au moins d'une partie de la zone active (S4) par rapport à la zone passive, au moins la valeur de réglage (12) étant représentée,
- sélection de la valeur d'échelle qui est située en deuxième position la plus proche du point de contact parmi les valeurs d'échelle, en tant que valeur voisine (16), la zone active comprenant la valeur voisine (16), et
- représentation de la valeur voisine (16) sur la surface d'affichage (6, 10), la valeur voisine (16) étant représentée sur la surface d'affichage sur un premier côté de la valeur de réglage (12) lorsque la valeur voisine est inférieure à la valeur de réglage, et étant représentée sur un deuxième côté de la valeur de réglage (12), situé à l'opposé du premier côté, lorsque la valeur voisine est supérieure à la valeur de réglage,
- dans lequel un écart représenté (f) entre la valeur de réglage (12) et la valeur voisine (16) sur la surface d'affichage (6, 10) divisée par la longueur d'affichage (L) est plus grand qu'un écart théorique entre la valeur de réglage (12) et la valeur voisine (16) divisée par la longueur d'échelle,
- identification d'un décalage du point de contact (S2) auquel l'utilisateur touche la surface d'affichage, la valeur voisine (16), en fonction de son écart par rapport au point de contact, étant représentée de manière plus petite, plus foncée et/ou moins contrastée par rapport à la valeur de réglage (12),
**caractérisé en ce qu'**
un facteur, dont la zone active est agrandie par rapport à la zone passive, est adapté à une grandeur du doigt et/ou est dépendant de la pression de contact au point de contact.

2. Procédé selon la revendication précédente, dans lequel l'échelle est divisée en un nombre déterminé de zones qui sont toutes représentées de la même taille avant le premier contact de la surface d'affichage (6, 10) par l'utilisateur.

3. Procédé selon l'une quelconque des revendications précédentes, dans lequel, en raison d'un contact d'une zone passive, celle-ci devient zone active, et dans lequel la zone jusqu'alors active devient zone passive.

4. Procédé selon l'une quelconque des revendications précédentes 1 à 3, dans lequel la zone active comprend une valeur d'échelle (13) immédiatement plus petite par rapport à la valeur de réglage (12), et une valeur d'échelle (14) immédiatement plus grande par rapport à la valeur de réglage (12), la représentation agrandie de la zone active comprenant
- la représentation, sur la surface d'affichage, de la valeur d'échelle (13) immédiatement plus petite sur un premier côté de la valeur de réglage (12), et
- la représentation, sur la surface d'affichage, de la valeur d'échelle (14) immédiatement plus grande par rapport à la valeur de réglage sur un deuxième côté de la valeur de réglage (12), opposé au premier côté,
- dans lequel un écart représenté (f) entre la valeur d'échelle (13) immédiatement plus petite et la valeur d'échelle (14) immédiatement plus grande sur la surface d'affichage divisée par la longueur d'affichage (L) est plus grand qu'un écart théorique entre la valeur d'échelle immédiatement plus petite et la valeur d'échelle immédiatement plus grande divisée par la longueur d'échelle,
- et dans lequel la valeur d'échelle (13) immédiatement plus petite et la valeur d'échelle (14) immédiatement plus grande, en fonction de leurs écarts par rapport au point de contact, sont représentées de manière plus petite, plus foncée et/ou moins contrastée par rapport à la valeur de réglage (12).

5. Procédé selon l'une quelconque des revendications précédentes 1 à 4, dans lequel lors d'un décalage du point de contact en direction de la valeur voisine (16), la valeur voisine est représentée de façon croissante de manière plus grande, plus claire et/ou plus contrastée, et la valeur de réglage (12) est représentée de façon croissante de manière plus petite, plus foncée et/ou moins contrastée, respectivement lors d'un décalage du point de contact vers le premier côté, la valeur d'échelle (13) immédiatement plus petite est représentée de façon croissante de manière plus grande, plus claire et/ou plus contrastée, et la valeur de réglage (12) ainsi que la valeur d'échelle (14) immédiatement plus grande sont représentées de façon croissante de manière plus petite, plus foncée et/ou moins contrastée, alors que lors d'un décalage du point de contact vers le deuxième côté, la valeur d'échelle (14) immédiatement plus grande est représentée de façon croissante de manière plus grande, plus claire et/ou plus contrastée, et la valeur de réglage (12) ainsi que la valeur d'échelle (13) immédiatement plus petite sont représentées de façon croissante de manière plus petite, plus foncée et/ou moins contrastée.

6. Procédé selon l'une quelconque des revendications précédentes, dans lequel les valeurs d'échelle comprennent des chiffres.

7. Procédé selon l'une quelconque des revendications précédentes, dans lequel les valeurs d'échelle comprennent au moins un mot.

8. Affichage de commande (1) tactile d'un appareil ménager, comme une cuisinière (24) ou un lave-linge (25), comprenant
- une unité de mémoire (2) destinée à mémoriser une échelle (3) comprenant plusieurs valeurs d'échelle, une différence entre la dernière valeur d'échelle et la première valeur d'échelle définissant une longueur d'échelle,
- une surface d'affichage (6) destinée à afficher au moins une partie de l'échelle, l'échelle présentant une longueur d'affichage (L) sur la surface d'affichage,
- un dispositif capteur (7) destiné à identifier un point de contact auquel un utilisateur touche la surface d'affichage (6), et
- une unité de commande (5) qui est configurée
a) pour sélectionner, en tant que valeur de réglage (12), la valeur d'échelle qui est située la plus proche du point de contact parmi les valeurs d'échelle, une zone de l'échelle, dans laquelle la valeur de réglage est située, étant sélectionnée comme zone active, et au moins une zone supplémentaire de l'échelle, laquelle est située au-delà de la zone active, étant sélectionnée comme zone passive, et
b) pour commander la surface d'affichage (6) de manière à ce qu'au moins une partie de la zone active soit représentée de manière agrandie par rapport à la zone passive, au moins la valeur de réglage (12) étant représentée,
- dans lequel l'unité de commande (5) est en outre configurée pour commander la surface d'affichage (6) de manière à ce qu'en plus de la valeur de réglage (12), elle représente au moins une valeur d'échelle supplémentaire (13, 14, 16) qui, en fonction de son écart par rapport au point de contact, est représentée de manière plus petite, plus foncée et/ou moins contrastée que la valeur de réglage (12),
- dans lequel l'unité de commande (5) commande simultanément l'appareil ménager,
- dans lequel le système capteur (7) est configuré pour identifier un décalage du point de contact auquel l'utilisateur touche la surface d'affichage,
- et dans lequel l'affichage de commande (1) tactile est configuré de manière à ce qu'un facteur, dont la zone active est agrandie par rapport à la zone passive, soit adapté à une grandeur du doigt et/ou soit dépendant de la pression de contact au point de contact.

9. Affichage de commande selon la revendication précédente, dans lequel l'unité de mémoire (2) mémorise des instructions de programme (4) qui peuvent être exécutées par l'unité de commande (5) pour réaliser ainsi le procédé selon l'une quelconque des revendications 1 à 7.

10. Affichage de commande selon l'une quelconque des revendications précédentes 8 ou 9, dans lequel l'unité de commande (5) est en outre configurée pour commander un appareil ménager, notamment une cuisinière (24) ou un lave-linge (25).

11. Appareil ménager, notamment cuisinière (24) ou lave-linge (25), comprenant un affichage de commande (1) tactile selon l'une quelconque des revendications précédentes 8 à 10.

12. Produit de programme informatique (8), notamment support de données avec logiciel ou paquet de données téléchargeables, lequel comprend des instructions de programme (4) qui exécutent le procédé (V) selon l'une quelconque des revendications 1 à 7, lorsqu'elles sont réalisées par une unité de commande (5) d'un affichage de commande (1) tactile.
